# EUROPEAN PATENT APPLICATION

(11) **EP 4 546 134 A1**
(43) Date of publication of application: **30.04.2025**
(21) Application number: 23841930.3
(22) Date of filing: 05.06.2023
(51) Int. Cl.: G06F 9/50, G06F 16/2455, G06F 16/22

(54) **RULE LOOKUP METHOD AND APPARATUS, DEVICE AND COMPUTER-READABLE STORAGE MEDIUM**

(30) Priority: 20.07.2022 CN 202210859083
(71) Applicant: Huawei Technologies Co., Ltd., Shenzhen, Guangdong 518129 (CN)
(72) Inventor: TIAN, Shuzhen, Shenzhen, Guangdong 518129 (CN); HU, Jing, Shenzhen, Guangdong 518129 (CN)
(74) Representative: Goddar, Heinz J.
(86) International application number: PCT/CN2023/098210
(87) International publication number: WO 2024/016863

(57) **Abstract**

This application discloses a rule searching method and apparatus, a device, and a computer-readable storage medium, and belongs to the communication field. The method includes: obtaining a first feature of a first packet; determining a second feature matching the first feature, where the second feature is obtained based on a first access control rule included in a first rule set, the second feature is one or more of features corresponding to a first type rule set, the first type rule set includes the first rule set and a second rule set, the first rule set includes at least one first access control rule, and the second rule set includes at least one second access control rule; and searching the at least one first access control rule for a target rule matching the first packet. A first rule set matching the first packet is quickly selected through feature matching, and only the first access control rule is searched for the target rule, so that a quantity of rules that need to be searched is reduced. Therefore, memory resource consumption can be reduced, searching time is shortened, and searching efficiency is improved.

## Description

This application claims priority to Chinese Patent Application No. 202210859083.4, filed on July 20, 2022, and entitled "RULE SEARCHING METHOD AND APPARATUS, DEVICE, AND COMPUTER-READABLE STORAGE MEDIUM", which is incorporated herein by reference in its entirety.

### TECHNICAL FIELD

This application relates to the communication field, and in particular, to a rule searching method and apparatus, a device, and a computer-readable storage medium.

### BACKGROUND

In a process of transmitting a packet from a source port to a destination port, the packet is forwarded between a plurality of network devices. When forwarding the packet, a network device needs to extract a field in a packet header, and search, based on the extracted field, an access control list (access control list, ACL) including a plurality of access control rules, to determine an action that needs to be performed on the packet. Therefore, a rule searching method is needed.

In a conventional technology, a plurality of access control rules in an ACL are stored in a classification engine. All access control rules stored in the classification engine are searched based on a to-be-searched packet, the packet is sequentially matched with each access control rule, to obtain an access control rule matching the packet, and then an action corresponding to the matched access control rule is performed on the packet.

However, according to the foregoing rule searching method, when the access control rule matching the packet is searched for, all the access control rules need to be searched. Consequently, memory resource consumption is high, searching time is long, and efficiency is low.

### SUMMARY

This application provides a rule searching method and apparatus, a device, and a computer-readable storage medium, to improve rule searching efficiency. Technical solutions are as follows.

According to a first aspect, a rule searching method is provided. The method includes: obtaining a first feature of a first packet; determining a second feature matching the first feature, where the second feature is obtained based on a first access control rule included in a first rule set, the second feature is one or more of features corresponding to a first type rule set, the first type rule set includes the first rule set and a second rule set, the first rule set includes at least one first access control rule, the second rule set includes at least one second access control rule, and the at least one first access control rule is different from the at least one second access control rule; and searching the at least one first access control rule for a target rule matching the first packet.

According to the rule searching method provided in this application, the first feature of the first packet is matched with the feature corresponding to the first type rule set, so that the second feature matching the first feature is determined from the feature corresponding to the first type rule set, the first rule set that is included in the first type rule set and that corresponds to the second feature is quickly selected based on a feature matching result, and only the first access control rule included in the matched first rule set is searched for the target rule, so that a quantity of rules that need to be searched in the first type rule set is reduced. Therefore, memory resource consumption can be reduced, searching time is shortened, and searching efficiency is improved.

In a possible implementation, before the determining a second feature matching the first feature, the method further includes: obtaining a common feature corresponding to the first access control rule included in the first rule set, and using the common feature as the second feature; and the obtaining a first feature of a first packet includes: extracting a first field that is in the first packet and that corresponds to the common feature, and using information about the first field as the first feature of the first packet. The second feature is the common feature of each first access control rule included in the first rule set, and the first feature is determined based on the first field corresponding to the common feature and is related to the common feature. This ensures matching between the first feature and the second feature. In this way, the first rule set is quickly determined, based on the feature matching result, from a rule set included in the first type rule set.

In a possible implementation, the obtaining a common feature corresponding to the first access control rule included in the first rule set includes: extracting a same field of each first access control rule included in the first rule set, and determining information about the same field as the common feature corresponding to the first access control rule included in the first rule set.

In a possible implementation, the obtaining a common feature corresponding to the first access control rule included in the first rule set includes: if in all first access control rules included in the first rule set, there is a same field in a character code of a first access control rule whose quantity is greater than a reference quantity, using the same field as the common feature corresponding to the first access control rule included in the first rule set. In this case, there are one or more common features. The same field of each first access control rule in all first access control rules may be used as the common feature, and a same field of some first access control rules may also be used as a common feature. In this way, implementation is more flexible.

In a possible implementation, before the determining a second feature matching the first feature, the method further includes: obtaining target content corresponding to the first access control rule included in the first rule set, mapping the target content to obtain a mapping value, and using the mapping value as the second feature, where the target content is all or a part of content of the first access control rule; and the obtaining a first feature of a first packet includes: extracting a second field that is in the first packet and that corresponds to the target content, mapping a value of the second field, and using an obtained mapping value as the first feature of the first packet. When the target content is mapped to obtain the second feature, all of the content of the first access control rule may be selected as the target content, or the part of the content of the first access control rule may be selected as the target content. This has high flexibility. In addition, a manner of obtaining the second feature is not limited, and any manner of obtaining the second feature has a corresponding manner of obtaining the first feature. This ensures implementation of the solutions and has high universality.

In a possible implementation, the searching the at least one first access control rule for a target rule matching the first packet includes: determining, in the first access control rule included in the first rule set, a reference rule matching the first packet; and determine, when there are a plurality of reference rules matching the first packet, a highest-priority reference rule in the plurality of reference rules as the target rule. The first rule set is first searched for a reference rule, and then the target rule is selected based on priorities of the plurality of reference rules, to ensure that the found target rule is a highest-priority access control rule. The first access control rule in the first rule set is first searched to determine the reference rule matching the first packet, and then the reference rule between the first rule sets is searched to determine the target rule. In this hierarchical searching manner, a hierarchical structure in a process of searching for the target rule is improved, and searching efficiency is improved.

In a possible implementation, the method further includes: obtaining a third feature of a second packet; determining, in a process of searching for the target rule corresponding to the first packet, a fourth feature matching the third feature, where the fourth feature is obtained based on a third access control rule included in a third rule set, the fourth feature is one or more of features corresponding to a second type rule set, the second type rule set includes the third rule set and a fourth rule set, the third rule set includes at least one third access control rule, the fourth rule set includes at least one fourth access control rule, and the at least one third access control rule is different from the at least one fourth access control rule; and searching the at least one third access control rule for a target rule matching the second packet.

According to the rule searching method provided in this application, on a basis of searching for the target rule corresponding to the first packet, the target rule corresponding to the second packet may be further searched for in parallel. Target rules corresponding to a plurality of packets are searched for in parallel, so that time for searching for the target rules corresponding to the plurality of packets is shortened, and rule searching efficiency is improved.

In a possible implementation, the second type rule set and the first type rule set are different rule sets. For different packets, different corresponding rule sets may be searched. This further improves searching efficiency.

In a possible implementation, the second type rule set and the first type rule set are a same rule set; and the searching the at least one first access control rule for a target rule matching the first packet includes: selecting, on a basis that a quantity of first rule sets is greater than a first quantity, the first quantity of first rule sets from a plurality of first rule sets, where the first quantity is determined based on a quantity of rule sets included in the first type rule set; and sequentially searching, based on the first quantity, first access control rules included in the plurality of first rule sets for the target rule matching the first packet. A relationship between the first type rule set and the second type rule set is not limited. The first type rule set and the second type rule set may be different rule sets, or may be a same rule set. The first type rule set and the second type rule set may be set based on an application scenario. This has high flexibility.

The first type rule set and the second type rule set are the same rule set. There is no need to increase a quantity of first access control rules and a quantity of second access control rules included in the first type rule set, and a plurality of packets can be searched in parallel. This does not affect consumption of memory resources storing a rule set. In addition, a quantity of first rule sets searched each time is limited, to ensure performance of parallel searching of a plurality of packets.

In a possible implementation, before the determining a second feature matching the first feature, the method further includes: obtaining a plurality of initial access control rules; and dividing different initial access control rules into one or more corresponding rule sets based on a similarity between the plurality of initial access control rules and a quantity of rule sets, to obtain the first type rule set.

The first type rule set is obtained through dividing based on the similarity between the plurality of initial access control rules, and an initial access control rule having a high similarity is grouped into a same rule set. A same packet is less likely to hit an initial access control rule having a large similarity difference. Therefore, an initial access control rule matching the same packet is grouped into a same rule set in a centralized manner, so that a quantity of hit first rule sets can be reduced, and a small quantity of first rule sets can be quickly searched for a rule matching the packet. This can further improve searching efficiency.

In a possible implementation, before the determining a second feature matching the first feature, the method further includes: obtaining a plurality of initial access control rules; and grouping a same type of initial access control rule into a same rule set, to obtain the first type rule set.

The same type of access control rule is grouped into the same rule set. A same packet is less likely to hit different types of initial access control rules. Therefore, the same type of initial access control rule is grouped into the same rule set in a centralized manner, so that a quantity of hit first rule sets can be reduced, and a small quantity of first rule sets can be quickly searched for a rule matching the packet. This can further improve searching efficiency.

According to a second aspect, a rule searching apparatus is provided. The apparatus includes: an obtaining module, configured to obtain a first feature of a first packet; a determining module, configured to determine a second feature matching the first feature, where the second feature is obtained based on a first access control rule included in a first rule set, the second feature is one or more of features corresponding to a first type rule set, the first type rule set includes the first rule set and a second rule set, the first rule set includes at least one first access control rule, the second rule set includes at least one second access control rule, and the at least one first access control rule is different from the at least one second access control rule; and a searching module, configured to search the at least one first access control rule for a target rule matching the first packet.

In a possible implementation, the obtaining module is further configured to obtain a common feature corresponding to the first access control rule included in the first rule set, and use the common feature as the second feature. The obtaining module is configured to extract a first field that is in the first packet and that corresponds to the common feature, and use information about the first field as the first feature of the first packet.

In a possible implementation, the obtaining module is configured to extract a same field of each first access control rule included in the first rule set, and determine information about the same field as the common feature corresponding to the first access control rule included in the first rule set.

In a possible implementation, the obtaining module is further configured to obtain target content corresponding to the first access control rule included in the first rule set, map the target content to obtain a mapping value, and use the mapping value as the second feature. The target content is all or a part of content of the first access control rule. The obtaining module is configured to extract a second field that is in the first packet and that corresponds to the target content, map a value of the second field, and use an obtained mapping value as the first feature of the first packet.

In a possible implementation, the searching module is configured to determine, in the first access control rule included in the first rule set, a reference rule matching the first packet; and determine, when there are a plurality of reference rules matching the first packet, a highest-priority reference rule in the plurality of reference rules as the target rule.

In a possible implementation, the obtaining module is further configured to obtain a third feature of a second packet. The determining module is further configured to determine, in a process of searching for the target rule corresponding to the first packet, a fourth feature matching the third feature. The fourth feature is obtained based on a third access control rule included in a third rule set. The fourth feature is one or more of features corresponding to a second type rule set. The second type rule set includes the third rule set and a fourth rule set. The third rule set includes at least one third access control rule. The fourth rule set includes at least one fourth access control rule. The at least one third access control rule is different from the at least one fourth access control rule. The searching module is further configured to search the at least one third access control rule for a target rule matching the second packet.

In a possible implementation, the second type rule set and the first type rule set are different rule sets.

In a possible implementation, the second type rule set and the first type rule set are a same rule set. The searching module is configured to select, on a basis that a quantity of first rule sets is greater than a first quantity, the first quantity of first rule sets from a plurality of first rule sets, where the first quantity is determined based on a quantity of rule sets included in the first type rule set; and sequentially search, based on the first quantity, first access control rules included in the plurality of first rule sets for the target rule matching the first packet.

In a possible implementation, the obtaining module is further configured to obtain a plurality of initial access control rules. The apparatus further includes a division module, configured to divide different initial access control rules into one or more corresponding rule sets based on a similarity between the plurality of initial access control rules and a quantity of rule sets, to obtain the first type rule set.

According to a third aspect, a network device is provided. The network device includes a processor. The processor is configured to invoke instructions from a storage and run the instructions stored in the storage, to enable the network device to implement the rule searching method according to the first aspect or any possible rule searching method according to the first aspect.

In a possible implementation, the network device further includes an input interface, an output interface, and the storage. The input interface, the output interface, the processor, and the storage are connected through an internal connection path.

According to a fourth aspect, a computer-readable storage medium is provided. The computer-readable storage medium stores at least one instruction. The instruction is loaded and executed by a processor to implement the rule searching method according to the first aspect or any possible rule searching method according to the first aspect.

According to a fifth aspect, a computer program product is provided. The computer program product includes a computer program/instructions. The computer program is executed/The instructions are executed by a processor, to enable a computer to implement the rule searching method according to the first aspect or any possible rule searching method according to the first aspect.

According to a sixth aspect, a communication apparatus is provided. The apparatus includes a transceiver, a storage, and a processor. The transceiver, the storage, and the processor communicate with each other through an internal connection path. The storage is configured to store instructions. The processor is configured to execute the instructions stored in the storage, to control the transceiver to receive and send signals. In addition, when the processor executes the instructions stored in the storage, the processor is enabled to perform the method according to the first aspect or any one of the possible implementations of the first aspect.

Optionally, there are one or more processors, and there are one or more storages.

Optionally, the storage may be integrated with the processor, or the storage and the processor are separately disposed.

In a specific implementation process, the storage may be a non-transitory (non-transitory) memory, such as a read-only memory (read-only memory, ROM). The storage and the processor may be integrated into a same chip, or may be separately disposed in different chips. A type of the storage and a manner of disposing the storage and the processor are not limited in this application.

According to a seventh aspect, a chip is provided. The chip includes a processor, configured to run a computer program or instructions, to enable a communication device on which the chip is installed performs the methods in the foregoing aspects.

According to an eighth aspect, another chip is provided. The chip includes an input interface, an output interface, a processor, and a storage. The input interface, the output interface, the processor, and the storage are connected through an internal connection path. The processor is configured to execute code in the storage. When the code is executed, the processor is configured to perform the methods in the foregoing aspects.

It should be understood that, in embodiments of this application, for beneficial effects achieved by technical solutions in the second aspect to the eighth aspect and corresponding possible implementations, refer to technical effects of the first aspect and corresponding possible implementations. Details are not described herein again.

### BRIEF DESCRIPTION OF DRAWINGS

FIG. 1 is a diagram of an implementation environment of a method according to an embodiment of this application;
FIG. 2 is a schematic flowchart of a rule searching method according to an embodiment of this application;
FIG. 3 is a diagram of a feature corresponding to a first rule set according to an embodiment of this application;
FIG. 4 is a diagram of a feature corresponding to another first rule set according to an embodiment of this application;
FIG. 5 is a diagram of matching performed by a filter according to an embodiment of this application;
FIG. 6 is a diagram of a structure of a searching component according to an embodiment of this application;
FIG. 7 is a diagram of a process of searching a first rule set according to an embodiment of this application;
FIG. 8 is a diagram of a structure of another searching component according to an embodiment of this application;
FIG. 9 is a diagram of a structure of a rule searching apparatus according to an embodiment of this application;
FIG. 10 is a diagram of a structure of a network device according to an embodiment of this application; and
FIG. 11 is a diagram of a structure of another network device according to an embodiment of this application.

### DESCRIPTION OF EMBODIMENTS

Terms used an implementation part of this application are only used to explain specific embodiments of this application, but are not intended to limit this application. To make the objectives, technical solutions, and advantages of this application clearer, the following further describes implementations of this application in detail with reference to the accompanying drawings.

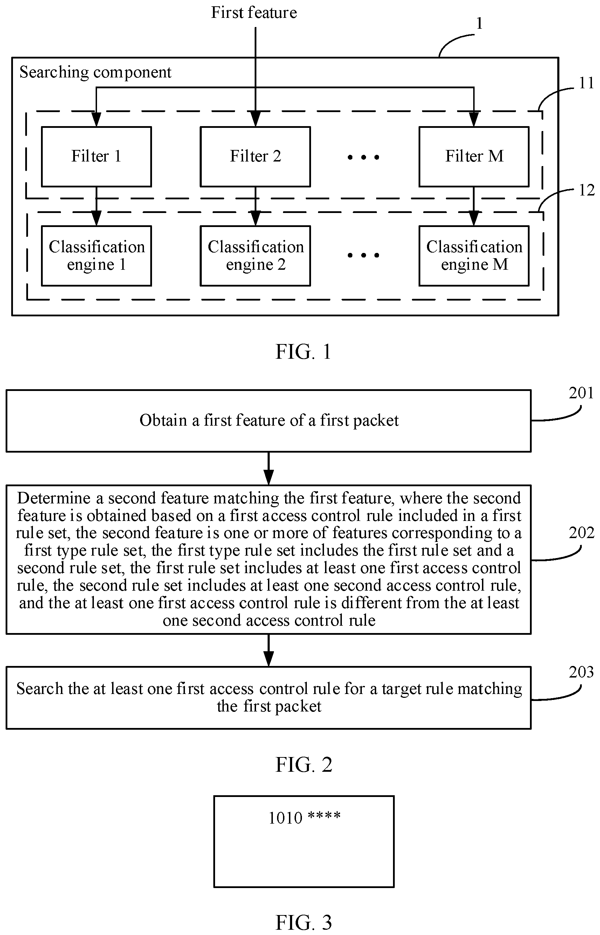

An embodiment of this application provides a rule searching method. FIG. 1 is a diagram of an implementation environment of a method according to an embodiment of this application. The implementation environment is a searching component 1, and the searching component 1 includes a filtering module 11 and a classification module 12. The filtering module 11 includes at least one filter (filter), for example, one or more of a filter 1, a filter 2, ..., and a filter M shown in FIG. 1. The classification module 12 includes a plurality of classification engines (classification engines), for example, one or more of a classification engine 1, a classification engine 2, ..., and a classification engine M shown in FIG. 1. The classification module 12 is configured to store a first type rule set. One classification engine in the classification module 12 stores one first rule set or one second rule set, and a filter connected to a classification engine is configured to store a feature corresponding to a first rule set or a second rule set stored in the classification engine. Optionally, the filtering module 11 is configured to determine a second feature matching a first feature, and the classification module 12 is configured to search a first access control rule included in a first rule set for a target rule matching a first packet.

It should be noted that the foregoing example is intended to describe a basic structure of the searching component, but not to limit the structure of the searching component. A location relationship between the filtering module 11 and the classification module 12 may be that the filtering module 11 is disposed above the classification module 12 shown in FIG. 1, and the filtering module 11 may be alternatively disposed on a side of the classification module 12. A connection between the filter included in the filtering module 11 and the classification engine included in the classification module 12 may be a physical connection implemented by using a signal cable. Cabling of the signal cable may be a straight line shown in FIG. 1, may be a fold line with an inflection point, or may be an irregular curve. Certainly, the connection between the filter and the classification engine may alternatively be a logical connection. This is not limited in this embodiment of this application. M in FIG. 1 is a positive integer greater than or equal to 1, and indicates a quantity of classification engines and a quantity of filters included in the searching component.

Optionally, the searching component 1 is disposed in a device configured to forward a packet, for example, a network device. The network device may be a router, a switch, a server, or the like.

An embodiment of this application provides a rule searching method. The method may be applied to the implementation environment shown in FIG. 1. For example, the rule searching method may be performed by a searching component. A flowchart of the method is shown in FIG. 2, and includes S201 to S203.

S201: Obtain a first feature of a first packet.

For example, a network device in which a searching component is disposed obtains a packet, for example, receives a packet sent by an upstream device, and uses the received packet as the first packet for which a rule needs to be searched. A type of the first packet is not limited in this embodiment of this application. For example, the first packet is a video type packet, or the first packet may be a game type packet. After receiving the first packet, the network device invokes the searching component to search for a target rule corresponding to the first packet. The searching component obtains the first packet, and further obtains the first feature of the first packet.

In a possible implementation, before the first feature of the first packet is obtained, a first type rule set further needs to be obtained. An obtaining process includes: obtaining a plurality of initial access control rules; and dividing different initial access control rules into one or more corresponding rule sets based on a similarity between the plurality of initial access control rules and a quantity of rule sets, to obtain the first type rule set. The first type rule set includes a first rule set and a second rule set.

Optionally, when a rule set into which an initial access control rule is grouped is the first rule set, the initial access control rule is a first access control rule. When a rule set into which an initial access control rule is grouped is the second rule set, the initial access control rule is second access control. In addition, a quantity of first rule sets and a quantity of second rule sets included in the first type rule set are not limited in this embodiment of this application. There may be one or more first rule sets and second rule sets. There may be one or more second rule sets. In addition to including the first rule set and the second rule set, the first type rule set may further include another rule set. This is not limited in this embodiment of this application. In some embodiments, the first type rule set may also be pre-stored in a storage device, and the storage device is located inside or outside the network device.

For example, the initial access control rule may be set based on experience, or during access to storage space, the initial access control rule stored in the storage space may be obtained from the accessed storage space. The storage space accessed by the searching component may be storage space of the network device in which the searching component is disposed, or may be storage space of another device.

Regardless of a manner based on which the initial access control rule is obtained, the initial access control rule includes but is not limited to a rule number and rule content. The rule content may be represented by a character code, and the rule number is used to distinguish between different initial access control rules. In a possible implementation, the character code may be determined based on at least one of a source port number, a destination port number, and an internet protocol (internet protocol, IP) address. A length of the character code may be any length. For example, the length of the character code is 8 bits (bits) or 10 bits.

Optionally, a similarity between two initial access control rules may be determined based on rule content, in other words, character codes, included in the initial access control rules. For example, a quantity of characters of a same field in the character codes of the two initial access control rules are divided by a total quantity of characters, to obtain a quotient, and the obtained quotient is the similarity between the two initial access control rules. The same field is a field that has a corresponding location and a same value. For example, a character code of an initial access control rule A is 1010 1111, and a character code of an initial access control rule B is 1100 1111. Same fields in the character code of the initial access control rule A and the character code of the initial access control rule B is a field that is located in the 1^{st} bit and whose value is 1, a field that is located in the 4^{th} bit and whose value is 0, and fields that are located in the 5^{th} bit to the 8^{th} bit and whose values are all 1. A quantity of characters of the same fields is 6. A total quantity of characters of the initial access control rule is 8. The quantity of the characters of the same fields is divided by a total quantity of characters to obtain a similarity between the initial access control rule A and the initial access control rule B, and the obtained similarity is 6/8=0.75.

It should be noted that a similarity between initial access control rules may be obtained by using the method described as an example in the foregoing embodiment, or may be obtained in another manner. This is not limited in this embodiment of this application. After the similarity between the plurality of initial access control rules is obtained, a plurality of rule sets are determined based on the similarity between the plurality of initial access control rules and a quantity of rule sets, to obtain the first type rule set. The quantity of rule sets is a total quantity of rule sets that need to be obtained, in other words, a total quantity of rule sets included in the first type rule set. The quantity of rule sets may be set based on experience and an implementation environment. For example, the implementation environment may be a total quantity of classification engines configured to store the first type rule set. Optionally, a similarity threshold is determined based on the quantity of rule sets and a quantity of the plurality of initial access control rules, and an initial access control rule having a similarity higher than the similarity threshold is grouped into one rule set, to obtain one rule set in the first type rule set.

A rule set to which the plurality of initial access control rules belong is determined based on the similarity between the plurality of initial access control rules, so that an initial access control rule having a high similarity is located in one rule set, and a distribution of initial access control rules in one rule set is more regular. In addition, in this manner of determining a rule set, a rule having a high similarity is in a same rule set, and a same packet is less likely to hit a rule having a large similarity difference. For the same packet, a rule matching the packet are centralized in a same rule set. Therefore, a quantity of hit first rule sets can be reduced, and a small quantity of first rule sets can be quickly searched for the rule matching the packet. This can further improve searching efficiency.

Optionally, in addition to determining the first type rule set based on the similarity between initial access control rules shown in the foregoing embodiment, one or more initial access control rules included in a rule set in the first type first rule set may be further determined based on content of the initial access control rule. For example, a same type of initial access control rule belongs to a same rule set. For example, a type of an initial access control rule is determined based on content of the initial access control rule. For example, in a plurality of initial access control rules, subsystem-identification (subsystem-identification, SID) is extracted as content of an initial access control rule, and in this case, a type of the initial access control rule is a SID type. In a plurality of initial access control rules, device identification (device identification, DID) is extracted as content of an initial access control rule, and in this case, a type of the initial access control rule is a DID type. In the plurality of initial access control rules, an initial access control rule of the SID type belongs to one rule set, and an initial access control rule of the DID type belongs to another rule set. For example, an initial access control rule having a same specified field is located in a same rule set. The specified field may be set based on a scenario or experience. For example, the specified field is a SID field, and an initial access control rule having the SID field belongs to a same rule set.

For example, at least one first access control rule included in the first rule set is different from at least one second access control rule included in the second rule set. That the first access control rule is different from the second access control rule means that content of the first access control rule is different from content of the second access control rule. A quantity of first access control rules included in the first rule set may be the same as or different from a quantity of second access control rules included in the second rule set. This is not limited in this embodiment of this application. After the plurality of rule sets included in the first type rule set are obtained, a feature corresponding to each rule set included in the first type rule set may be obtained, to obtain a feature corresponding to the first type rule set. In this way, the first feature of the first packet is determined based on a manner of determining the feature corresponding to the first type rule set.

In addition, the first type rule set includes the first rule set and the second rule set. Therefore, determining the feature corresponding to the first type rule set includes determining a feature corresponding to the first rule set and a feature corresponding to the second rule set. Because a process of determining the feature corresponding to the first rule set is similar to a process of determining the feature corresponding to the second rule set, the process of determining the feature corresponding to the first rule set is used as an example herein, to describe a process of determining the feature corresponding to the first type rule set. In addition, a second feature is obtained based on the first access control rule included in the first rule set, and it may be understood that the second feature is the feature corresponding to the first rule set. Therefore, determining the feature corresponding to the first rule set is determining the second feature. Optionally, a manner of determining the second feature includes but is not limited to the following two manners.

Determining Manner 1: Obtain a common feature corresponding to the first access control rule included in the first rule set, and use the common feature as the second feature.

Optionally, a process of obtaining the common feature includes: extracting a same field of each first access control rule included in the first rule set, and determining information about the same field as the common feature corresponding to the first access control rule included in the first rule set. The same field is a same field in a character code of each first access control rule. For descriptions of the same field, refer to the foregoing embodiment. Details are not described herein. For example, Table 1 shows a first rule set.

**Table 1**

| Rule number | Character code |
|---|---|
| R1 | 1010 0000 |
| R2 | 1010 0100 |
| R3 | 1010 0111 |
| R4 | 1010 1000 |

The first rule set shown in Table 1 includes four first access control rules. Rule numbers are R1, R2, R3, and R4 respectively. For character codes corresponding to different first access control rules, refer to Table 1. Character lengths are all 8 bits (bits). R1 is used as an example to describe a correspondence between a rule number and a character code in a first access control rule shown in Table 1. For a first access control rule whose rule number is R1, a character code is 1010 0000.

The same field of the character code of each first access control rule included in the first rule set is exacted, so that information about the same field is determined as the common feature corresponding to the first access control rule included in the first rule set. The first rule set shown in Table 1 is used as an example. Same fields of character codes of the four first access control rules are fields of the 1^{st} bit to the 4^{th} bit, and are all 1010. Based on this, a common feature corresponding to the first rule set shown in Table 1 is 1010 ****. "*" indicates that there is no value requirement on a value in this location, and the value may be any value, in other words, may be 1, or may be 0. A location in which there is no value requirement is represented by using "*". In this way, on the basis of determining a value of a field in a common feature, a location relationship between values may be further determined. For example, a common feature corresponding to each first access control rule included in a first rule set is 1*11 0**1. This indicates that values of the 1^{st} bit, the 3^{rd} bit, and the 4^{th} bit, and 8^{th} bit are all 1, a value of the 5^{th} bit is 0, and there is no value requirement on values of the 2^{nd} bit, the 6^{th} bit, and the 7^{th} bit.

It should be noted that the foregoing example is intended to describe a manner of obtaining the common feature, but not to limit the common feature. As shown in the foregoing example, there may be one common feature corresponding to a first access control rule included in one first rule set, or there may be a plurality of common features. For example, if in all first access control rules included in one first rule set, there is a same field in a character code of a first access control rule whose quantity is greater than a reference quantity, the same field is used as a common feature corresponding to the first access control rules included in the first rule set. For example, a reference quantity is 2, there is a first rule set A, and character codes of six first access control rules included in the first rule set A are respectively 1010 1111, 1010 1100, 1011 1010, 1011 1011, 1010 0100, and 1011 0010. In character codes 1010 1111, 1010 1100, and 1010 0100, there are same fields 1010. In character codes 1011 1010, 1011 1011, and 1011 0010, there are same fields 1011. A quantity of first access control rules corresponding to each same field is greater than the reference quantity 2. Therefore, it is determined that common features corresponding to the six first access control rules included in the first rule set A are 1010 **** and 1011 ****. In other words, a quantity of common features corresponding to the six first access control rules included in the first rule set A is 2.

After the common feature is obtained, the common feature may be used as the feature, in other words, the second feature, corresponding to the first rule set. FIG. 3 is a diagram of a feature corresponding to a first rule set according to an embodiment of this application. The first rule set corresponding to FIG. 3 is the first rule set shown in Table 1, and a corresponding feature is "1010 ****". Certainly, the foregoing example is merely used to describe a process of determining, based on information about the same field, the feature corresponding to the first rule set, but is not used to limit a representation manner of the feature corresponding to the first rule set. The searching component may select the manner shown in the foregoing embodiment, and use "*" to represent a location in which there is no value requirement. The searching component may further determine, in another manner, a value in each location in the feature corresponding to the first rule set. This is not limited in this embodiment of this application.

Determining manner 2: Obtain target content corresponding to the first access control rule included in the first rule set, map the target content to obtain a mapping value, and use the mapping value as the second feature, where the target content may be all or a part of content of the first access control rule.

In a possible implementation, the target content may be determined from the content, in other words, a character code, of the first access control rule, based on a mask corresponding to the first rule set. For example, an AND operation is performed on the mask and the character code of the first access control rule, and a result obtained by performing the AND operation is used as the target content of the first access control rule. The mask may be set based on experience, and one first rule set corresponds to one mask. The first access control rule whose rule number is R1 shown in Table 1 is used as an example, and the character code is 1010 0000. When a mask (mask) is 1111 1111, a result obtained by performing an AND operation is 1010 0000. In other words, all 8 characters are selected as target content corresponding to the first access control rule R1. The first access control rule whose rule number is R2 shown in Table 1 is used as an example, and the character code is 1010 0100. When a mask (mask) is 1110 0000, a result obtained by performing an AND operation is 1010 0000. In other words, characters of the 1^{st} bit to the 3^{rd} bit are selected as target content corresponding to the first access control rule R2.

Based on the foregoing example, it may be understood that when the target content is selected from the character code, all of the character code may be selected as the target content, or a part of the character code may be selected as the target content. This is not limited in this embodiment of this application. After the target content of each first access control rule in the first rule set is obtained, the target content may be mapped to obtain the mapping value. Optionally, a function used to map the target content is a hash (hash) function, or may be another mapping function.

For example, mapping the target content based on a function means that target content corresponding to each first access control rule is calculated by using the hash function, to obtain a function value of each target content. A function value of any target content is used to represent a target location corresponding to any target content in an initial array, and the target location corresponding to the function value of each target content in the initial array is adjusted from an initial value to a first value, to obtain a mapping value. The initial value and the first value are two different values. Optionally, the initial value is 0, and in this case the first value is 1. Optionally, the initial value is 1, and in this case the first value is 0. The initial array is an array determined based on experience and a quantity of first access control rules included in the first rule set.

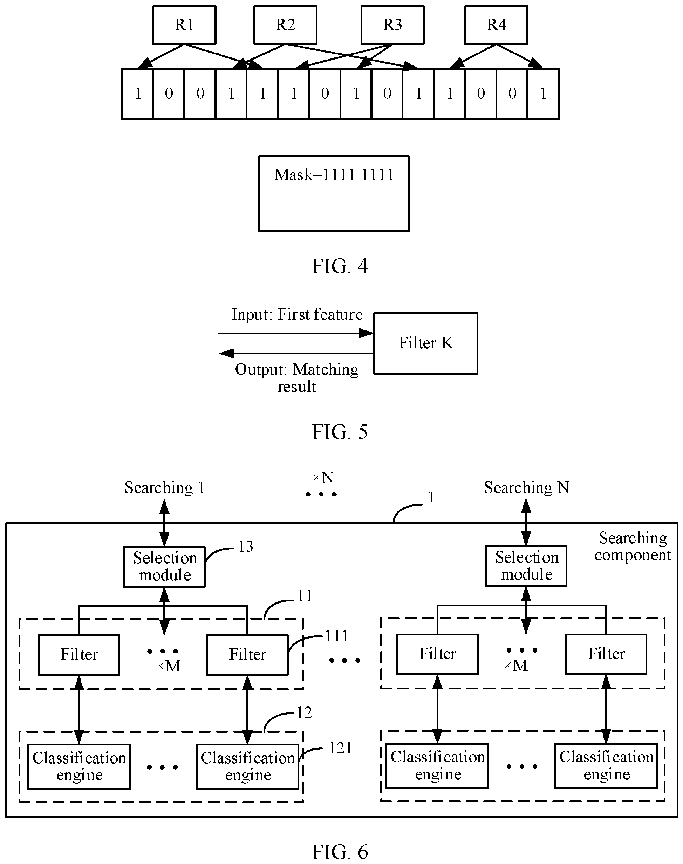

FIG. 4 is a diagram of a feature corresponding to a first rule set according to an embodiment of this application. The first rule set is the first rule set shown in Table 1. A mask shown in FIG. 4 is 1111 1111. This means that fields of first 8 bits of the character code, in other words, all of the character code, of the first access control rule are selected as the target content. Refer to FIG. 4. Two target locations can be determined by using a function value obtained by calculating target content corresponding to one first access control rule by using the hash function. For example, the target content corresponding to the first access control rule R1 is calculated by using the hash function. Target locations corresponding to an obtained function value are the 1^{st} bit and the 5^{th} bit of an initial array. The 1^{st} bit and the 5^{th} bit are adjusted from an initial value 0 to a first value 1. For a correspondence between a function value of another first access control rule and a target location of an initial array, refer to FIG. 4. Details are not described herein. The target content corresponding to the four first access control rules is calculated sequentially by using the hash function, and an obtained mapping value is 1001 1101 0110 01. The mapping value is used as the feature, in other words, the second feature, corresponding to the first rule set.

Optionally, when determining, by using a filter, the feature corresponding to the first rule set, the searching component may select any one of the foregoing determining manners. When the filter selects Determining Manner 1 to determine the feature corresponding to the first rule set, stored information is common information of the same field of the plurality of first access control rules. When the filter selects Determining Manner 2 to determine the feature corresponding to the first rule set, a structure of the filter is a query structure similar to a bloom filter (bloom filter). The two determining manners need to consume small quantity of storage resources. A filter corresponding to the first rule set is also a filter connected to a classification engine storing the first rule set. The searching component shown in FIG. 1 is used as an example. A first rule set 1 is stored in the classification engine 1, and a feature corresponding to the first rule set 1 is stored in the filter 1 connected to the classification engine 1. For the foregoing two determining manners, there are also two obtaining manners for the first feature of the first packet.

Obtaining Manner 1: Extract a first field that is in the first packet and that corresponds to the common feature, and use information about the first field as the first feature of the first packet.

For example, Obtaining Manner 1 is applied to an application scenario in which the second feature is determined in Determining Manner 1. Corresponding to the common feature means corresponding to a location of the common feature. For example, a reference field is selected from the first packet based on a determining manner of a character code, and a field that is in the reference field and that corresponds to the location of the common feature is determined as the first field. The common feature 1010 determined based on Table 1 is still used as an example. When the character code in Table 1 is a source port number, the reference field of the first packet is a source port number encapsulated in the first packet. The source port number is 1010 1111, and the field that is in the reference field and that corresponds to the location of the common feature is fields of the 1^{st} bit to the 4^{th} bit of the source port number encapsulated in the first packet. In this case, the first field of the first packet is 1010, and the first feature obtained based on information about the first field is from the 1^{st} bit to the 4^{th} bit, in other words, 1010.

Obtaining Manner 2: Extract a second field that is in the first packet and that corresponds to the target content, map a value of the second field, and use an obtained mapping value as the first feature of the first packet.

For example, Obtaining Manner 2 is applied to an application scenario in which the second feature is determined in Determining Manner 2. Corresponding to the target content means corresponding to a location of a target feature. An example in which the target content is selected based on the mask shown in the foregoing embodiments is used. The second field is determined based on a reference field and the mask. When the character code in the first access control rule is a source port number, the reference field of the first packet is a source port number encapsulated in the first packet. An AND operation is performed on the source port number and a mask used to determine the common feature, to obtain the second field of the first packet. For example, the mask is 1111 1111, the source port number of the first packet is 1010 1111, and the second field obtained by performing an AND operation is 1010 1111.

The second field is mapped by using a mapping function, and an obtained mapping value, in other words, the first feature, indicates a location that is in a target array and that corresponds to the first packet. It should be noted that the mapping function used to map the second field and the mapping function used to map the target content are a same mapping function. For example, when the target content is mapped by using a hash function, the second field is also mapped by using the same hash function.

S202: Determine the second feature matching the first feature, where the second feature is obtained based on the first access control rule included in the first rule set, the second feature is one or more of features corresponding to the first type rule set, the first type rule set includes the first rule set and the second rule set, the first rule set includes at least one first access control rule, the second rule set includes at least one second access control rule, and the at least one first access control rule is different from the at least one second access control rule.

For example, the second feature is a feature that is in the feature corresponding to the first type rule set and that successfully matches the first feature. The second feature is obtained based on the first access control rule included in the first rule set. In other words, the second feature is the feature corresponding to the first rule set, but the feature corresponding to the second rule set fails to match the first feature of the first packet. Therefore, the second feature matching the first feature may be determined, and the first rule set corresponding to the second feature may be selected, from the plurality of rule sets included in the first type rule set, as a rule set that is subsequently to be searched. Optionally, when the feature corresponding to the first type rule set is determined in Determining Manner 1 in S201, determining a matching result between the first feature and the feature corresponding to the first type rule set is determining, through comparison, whether the first feature is the same as the feature corresponding to the first type rule set. When the feature corresponding to the first type rule set is the same as the first feature, the feature corresponding to the first type rule set successfully matches the first feature. When the feature corresponding to the first type rule set is different from the first feature, the feature corresponding to the first type rule set fails to match the first feature.

An example in which the feature corresponding to the first rule set in Table 1 shown in the foregoing embodiment is 1010 is still used. When a first feature of a first packet A is 1010, the first feature 1010 of the first packet A is the same as the feature 1010 corresponding to the first rule set. The feature corresponding to the first rule set is a second feature that successfully matches. When a first feature of a first packet B is 1011, the first feature 1011 of the first packet B is different from the feature 1010 corresponding to the first rule set. The feature corresponding to the first rule set fails to match.

Optionally, when the feature corresponding to the first type rule set is determined in Determining Manner 2 in S201, determining a matching result between the first feature and the feature corresponding to the first type rule set is searching for a corresponding location of the first packet in the target array based on the first feature. When each corresponding location of the first packet is a first value, it is determined that the first feature successfully matches the feature corresponding to the first type rule set. The feature corresponding to the first type rule set is the second feature.

The target array shown in FIG. 4, namely, the feature corresponding to the first rule set, is still used as an example. Corresponding locations indicated by a first feature of a first packet A are the 1^{st} bit and the 5^{th} bit of the target array, and both the foregoing two locations are a first value 1. It is determined that the first feature of the first packet A successfully matches the feature corresponding to the first rule set. For another example, corresponding locations indicated by a first feature of a second packet B are the 2^{nd} bit and the 4^{th} bit of the target array. The 2^{nd} bit is 0 and is not a first value. The 4^{th} bit is 1 and is the first value. It is determined that the first feature of the first packet B fails to match the feature corresponding to the first rule set.

For the second rule set, determining a matching result between the first feature and the feature corresponding to the second rule set is similar to determining a matching result between the first feature and the feature corresponding to the first rule set. Details are not described herein. A rule set that is included in the first type rule set and that is the first rule set and a rule set that is included in the first type rule set and that is the second rule set are determined based on the feature matching result. The first rule set is a rule set whose corresponding feature successfully matches the first feature. In other words, the feature corresponding to the first rule set includes the second feature. The second rule set is a rule set whose corresponding feature fails to match the first feature. Failing to match includes two cases: that matching fails and that feature matching is performed without using the method in embodiments of this application. In other words, for the second rule set, rule searching may be performed by using the method provided in embodiments of this application, or may be performed by using another method.

In the foregoing comparison method, there is no need to sequentially match the first packet with an initial access control rule included in the first type rule set. Matching between the first feature and the feature corresponding to the first type rule set is performed, so that the first rule set in the first type rule set can be determined. In this way, whether the first type rule set includes an initial access control rule matching the first packet is determined. This effectively controls a quantity of rule matching times. Regardless of the first manner in which whether features are the same is directly determined through comparison, or the second manner in which a value in the target array is searched, because a quantity of needed comparison/searching times is limited, an initial access control rule that is not included and that matches the first packet, that is, a second access control rule included in the second rule set, may be quickly filtered out. This effectively controls a quantity of first rule sets that need to be searched subsequently, and reduces a quantity of rules that need to be searched.

In a possible implementation, the searching component performs, by using the filter, an action of matching the first feature with the feature corresponding to the first type rule set. FIG. 5 is a diagram of a process in which a filter performs matching. After a first feature of a first packet is input into a filter K, the filter K performs matching based on the first feature and a stored feature corresponding to a first type rule set, and outputs a matching result after the matching is finished. The matching result includes a matching failure or a matching success. K is any positive integer, and is used to distinguish between different filters. Optionally, different matching results indicate different transmission destinations of the matching results.

FIG. 6 is a diagram of a structure of another searching component according to an embodiment of this application. Refer to FIG. 6. A searching component 1 includes a filtering module 11 and a classification module 12, and a selection module 13 is further disposed in the searching component 1. When receiving a first feature of a first packet, the selection module 13 copies a plurality of first features, and separately sends the plurality of first features obtained through copying to filters. In this way, the filters obtain the first feature used for matching and perform a subsequent action. It may be understood that an execution body of inputting the first feature into the filter K shown in FIG. 5 is the selection module 13 disposed in the searching component 1.

Based on the searching component shown in FIG. 6, when a matching result between the first feature and a feature that is stored in the filter and that corresponds to a first type rule set is that matching fails, a transmission destination of the matching result is the selection module. When a matching result between the first feature and a feature that is stored in the filter and that corresponds to a first type rule set is that matching is successful, a transmission destination of the matching result is a classification engine corresponding to the filter, in other words, a classification engine storing a first rule set corresponding to a second feature. The classification engine performs an operation of S203.

S203: Search the at least one first access control rule for a target rule matching the first packet.

For example, the first rule set corresponding to the second feature is a first rule set used to determine the second feature. For example, a feature corresponding to a rule set 1 is determined based on each initial access control rule included in the rule set 1 in the first type rule set. Because the feature corresponding to the rule set 1 successfully matches the first feature, the feature corresponding to the rule set 1 is the second feature, and the rule set 1 is the first rule set corresponding to the second feature.

For the diagram of the structure of the searching component shown in FIG. 1, when the feature that is stored in the filter and that corresponds to the first type rule set is the second feature matching the first feature, the first rule set corresponding to the second feature may be understood as a rule set stored in a classification engine connected to the filter storing the second feature. As shown in FIG. 1, a first rule set corresponding to a second feature stored in the filter 1 is a rule set stored in the classification engine 1, and a first rule set corresponding to a second feature stored in the filter 2 is a rule set stored in the classification engine 2. Other correspondences may be deduced by analogy. Details are not described herein.

The first rule set corresponding to the second feature is selected, from a rule set included in the first type rule set, as a to-be-searched rule set, and a rule searching action is not performed on the second rule set that fails to match the first feature. The structure of the searching component shown in FIG. 6 is used as an example, to describe a process of controlling a quantity of to-be-searched first rule sets. When the first feature successfully matches a feature that is stored in a filter 111 and that corresponds to a rule set, the feature that is stored in the filter 111 and that corresponds to the rule set is the second feature. The filter 111 sends a reference field of the first packet to a classification engine 121 connected to the filter 111, so that the classification engine 121 performs a rule searching action based on the received reference field. The rule set stored in the classification engine 121 is the first rule set, the stored first rule set is searched for the first access control rule matching the first packet. The reference field is a field that is used to determine the first feature and that corresponds to a character code of the first access control rule.

When the first feature fails to match a feature that is stored in a filter and that corresponds to a rule set, the filter sends a matching result to the selection module. A classification engine connected to the filter does not receive the matching result, and an action of searching a stored rule set is not triggered. In addition, the classification engine connected to the filter does not receive the reference field of the first packet, and rule searching cannot be performed when a searching primary key (key) is absent. Based on this, the first rule set corresponding to the second feature is a rule set stored in a part that is of classification engines and that receives the reference field of the first packet.

In a possible implementation, a process of searching for a target rule includes: determining, in the first access control rule included in the first rule set, a reference rule matching the first packet; and determining, when there are a plurality of reference rules matching the first packet, a highest-priority reference rule in the plurality of reference rules as the target rule.

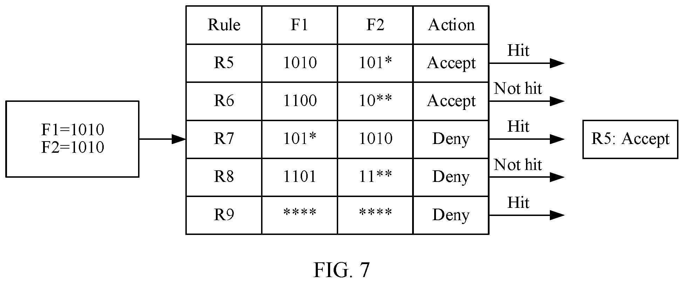

Optionally, the reference field of the first packet is compared with the character code of each first access control rule. When the reference field of the first packet is the same as the character code of each first access control rule, it is determined that the first access control rule successfully matches the first packet. FIG. 7 is a diagram of a process of searching a first rule set according to an embodiment of this application. Refer to FIG. 7. A reference field of a first packet includes two parts: F1=1010 and F2=1010. For each first access control rule that is searched for and that is included in a first rule set corresponding to a second feature, refer to a table shown in FIG. 7. The table includes five first access control rules: R5, R6, R7, R8, and R9. One first access control rule includes three parts: a rule (rule) number, a character code including F1 and F2, and an action (action). For descriptions of the rule number and the character code, refer to descriptions of the rule number and the character code in S201.

The action included in the first access control rule is an action that may be performed on the first packet after the first packet successfully matches the first access control rule. In the five first access control rules that are included in the first rule set shown in FIG. 7 and whose rule numbers are R5, R6, R7, R8, and R9, corresponding executable actions include two types: accept (accept) and deny (deny). The first access control rule whose rule number is R5 as used an example. After the first packet successfully matches the first access control rule R5, an action performed on the first packet is to accept receiving of the first packet. For correspondences of other first access control rules, refer to the table shown in FIG. 7. Details are not described herein.

For example, when searching, by using a classification engine based on the reference field of the first packet, for the first access control rule matching the first packet, a searching component may use a decision tree algorithm or a hash algorithm to implement fast matching of the first access control rule. "*" included in the table shown in FIG. 7 is similar to descriptions of "*" in S201. The first access control rule R5 and the first access control rule R6 are respectively used as examples to describe processes of matching the first packet with the first access control rules. The reference field of the first packet is 1010 1010, and the character code of the first access control rule R5 is 1010 101*. Because there is no value requirement on the 8^{th} bit of the character code, a value of the 8^{th} bit may be 0 or 1. In other words, 1010 1011 or 1010 1010 is a field that successfully matches the character code of the first access control rule R5. The reference field of the first packet is 1010 1010, and the reference field of the first packet successfully matches the character code of the first access control rule R5, in other words, "hit" (hit) shown in FIG. 7. When the reference field of the first packet is 1010 1010, and the character code of the first access control rule R6 is 1100 10**, because values of the 2^{nd} bit and the 3^{rd} bit in the reference field of the first packet are different from values of the 2^{nd} bit and the 3^{rd} bit of the character code of the first access control rule R6, the reference field of the first packet fails to match the character code of the first access control rule R6, in other words, "not hit" (not hit) shown in FIG. 7.

It should be noted that a reference rule of the first rule set is a highest-priority first access control rule in the first access control rules matching the first packet. For example, in a case in which the first rule set includes a plurality of first access control rules matching the first packet, the reference rule of the first rule set may be determined, based on first priorities of the first access control rules included in the first rule set, from the plurality of first access control rules matching the first packet t. For example, in matching results that are between the first packet and first access control rules and that are shown in FIG. 7, there are three first access control rules matching the first packet: the first access control rule R5, the first access control rule R7, and the first access control rule R9. A first access control rule with a highest first priority is selected, based on first priorities of the plurality of first access control rules matching the first packet, from the plurality of first access control rules matching the first packet as the reference rule of the first rule set. The three first access control rules that match the first packet and that are shown in FIG. 7 are used as examples. The first access control rule R5 with a highest first priority is selected as a candidate rule of the first rule set. Optionally, the first priority may be set based on experience or an application scenario.

In a possible implementation, in addition to the foregoing embodiment showing that the plurality of first access control rules matching the first packet are first selected from the first rule set, and then the first access control rule with the highest first priority is selected as the reference rule of the first rule set based on the first priorities of the plurality of first access control rules, alternatively, the first packet may be sequentially matched with the first access control rules based on the first priorities. In response to a case that a first access control rule in the first rule set successfully matches the first packet, an action of searching based on the first access control rule included in the first rule set is finished, and the first access control rule matching the first packet is determined as the reference rule of the first rule set.

The first rule set shown in FIG. 7 is still used as an example. The first rule set includes three first access control rules that successfully match the reference field of the first packet. However, because the first access control rule R5 has the highest first priority, when matching is performed based on the first priority, matching with other first access control rules is stopped after it is determined that the first access control rule R5 successfully matches the reference field of the first packet, and the first access control rule R5 is output as the reference rule of the first rule set.

When there are a plurality of first rule sets corresponding to the second feature, in other words, there are a plurality of reference rules of the first rule set, a reference rule with a highest second priority is selected as the target rule based on second priorities of the plurality of reference rules. Optionally, the second priority of the reference rule may be determined based on a level of the first rule set. For example, there are a reference rule 1 of a first rule set 1, a reference rule 2 of a second rule set 2, and a reference rule 3 of a third rule set 3. The reference rule 1 with a highest second priority is selected as a target rule based on a second priority between the reference rules.

For example, the searching component performs, by using the classification engine, an operation of determining the reference rule matching the first packet. Priority comparison between the reference rules of the first rule sets is performed by using the selection module. The selection module has a buffering function and a priority comparison function, and can determine a target rule based on a received reference rule.

In a possible implementation, in addition to being configured to search for the first packet, the searching component may further search for another packet in parallel on the basis of searching for the first packet. Optionally, the method provided in embodiments of this application further includes: obtaining a third feature of a second packet; determining, in a process of searching for the target rule corresponding to the first packet, a fourth feature matching the third feature, where the fourth feature is obtained based on a third access control rule included in a third rule set, the fourth feature is one or more of features corresponding to a second type rule set, the second type rule set includes the third rule set and a fourth rule set, the third rule set includes at least one third access control rule, the fourth rule set includes at least one fourth access control rule, and the at least one third access control rule is different from the at least one fourth access control rule; and searching the at least one third access control rule for a target rule matching the second packet.

It should be noted that, the second packet is a packet that is searched for in parallel with the first packet, and this does not mean that the second packet is a packet that is obtained simultaneously with the first packet. The first packet and the second packet may be packets received at a same moment by a network device including the searching component, or may be packets received at different moments. For example, after receiving a packet, the network device schedules, at a specific interval based on a usage status of a searching pipeline of the searching component, the searching component to perform rule searching based on the received packet. For example, when the network device receives the first packet, a plurality of searching pipelines of the searching component are running, and no idle searching pipeline exists. Therefore, the network device buffers the first packet in buffer space. After three minutes, the network device receives the second packet, and two searching pipelines of the searching component ends running. Based on this, the network device schedules the searching component to perform corresponding rule searching in parallel based on the first packet and the second packet.

Optionally, the second type rule set and the first type rule set are different rule sets. That the first type rule set and the second type rule set are different rule sets means that an access control rule stored in the first type rule set and an access control rule stored in the second type rule set are different. An initial access control rule included in the first type rule set may be completely different from a candidate access control rule included in the second type rule set, or an initial access control rule included in the first rule set may be partially different from a candidate access control rule included in the second rule set. For a relationship between a quantity of rule sets included in the first type rule set and a quantity of rule sets included in the second type rule set, the quantities may be the same or may be different. This is not limited in this embodiment of this application.

The searching component shown in FIG. 6 is still used as an example, to describe searching performed in parallel in a case in which the first type rule set and the second type rule set are different rule sets. Searching 1 is a searching pipeline (pipeline) used to search for the target rule matching the first packet, and searching N is a searching pipeline used to search for the target rule matching the second packet. N is a positive integer greater than 0 and less than M. The first type rule set is stored in a classification engine included in a left dashed box, and the second type rule set is stored in a classification engine included in a right dashed box. Because a searching pipeline for searching the first type rule set and a searching pipeline for searching for the second type rule set are two independent searching pipelines, modules in the two searching pipelines may run independently. Based on this, the first type rule set and the second type rule set may be searched in parallel, and for each searching pipeline, only a corresponding classification module is searched.

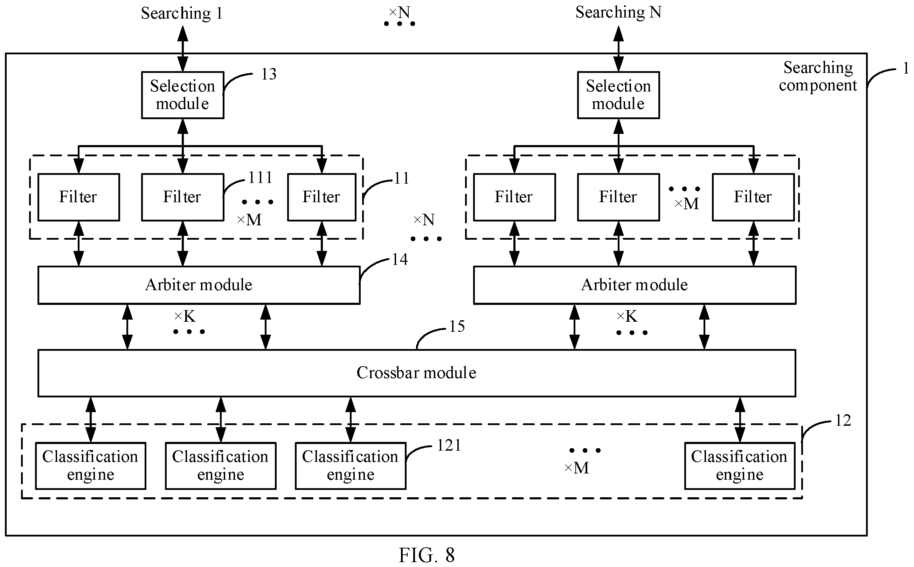

In a possible implementation, the second type rule set and the first type rule set may alternatively be a same rule set. In this case, a structure of a searching component may be shown in FIG. 8. Different searching pipelines have independent selection modules 13, filtering modules 11, and arbiter (arbiter) modules 14, but share one crossbar (crossbar) module 15 and one classification module 12. It should be noted that, because a filtering module corresponding to a first packet and a filtering module corresponding to a second packet are two independent filtering modules, the two filtering modules may select a same manner to determine a feature corresponding to a first type rule set. For example, both the filtering module corresponding to the first packet and the filtering module corresponding to the second packet select Determining Manner 1 to determine the feature corresponding to the first type rule set. Certainly, the two filtering modules may further select different manners to determine the feature corresponding to the first type rule set. For example, the filtering module corresponding to the first packet selects Determining Manner 1 to determine the feature corresponding to the first type rule set, and the filtering module corresponding to the second packet selects Determining Manner 2 to determine the feature corresponding to the first type rule set.

However, in a scenario in which the second type rule set and the first type rule set are the same rule set, a plurality of searching pipelines share one classification module, and a total quantity of first rule sets that are searched by the plurality of searching pipelines may be greater than a quantity of rule sets included in the first type rule set. Therefore, a searching threshold needs to be set for each pipeline, to limit a quantity of first rule sets that are searched in parallel by the pipeline. This avoids occurrence of the foregoing case.

For example, the first quantity of first rule sets are selected, on a basis that a quantity of first rule sets is greater than a first quantity, from a plurality of first rule sets. The first quantity is determined based on the quantity of rule sets included in the first type rule set. The first access control rules included in the plurality of first rule sets are sequentially searched, based on the first quantity, for the target rule matching the first packet. Optionally, in other words, the first quantity is the searching threshold. The first quantity is less than the quantity of rule sets included in the first type rule set, and a product of the first quantity and a quantity of searching pipelines of the searching component is not greater than the quantity of rule sets included in the first type rule set. The searching component shown in FIG. 8 is used as an example. When the quantity of searching pipelines of the searching component is N, and the quantity of rule sets included in the first type rule set is M, in other words, a quantity of a plurality of classification engines is M, K×N≤M in this case. For example, if the quantity M of rule sets included in the first type rule set is 10, and the quantity N of searching pipelines is 3, the first quantity K is a positive integer not greater than 3 in this case.

Selection of the first quantity of first rule sets from the plurality of first rule sets may be random selection, or may be selection based on determining time of a second feature. For example, after a feature that is stored in a filter and that corresponds to a first type rule set successfully matches a first feature of the first packet, the filter sends a matching result to the arbiter module. The arbiter module uses, based on this, receiving time of the matching result as determining time of the second feature stored in the filter, and the arbiter module selects the first quantity of second features based on determining time of a plurality of second features. Certainly, the arbiter module may alternatively perform selection in another manner. This is not limited in this embodiment of this application.

An example in which the first quantity is 3 is used to describe the foregoing sequential searching process. Optionally, in a plurality of filters, features that are stored in five filters and that correspond to the first type rule set successfully match the first feature of the first packet. The filters are a filter 1, a filter 2, a filter 3, a filter 4, and a filter 5. Because the quantity of first rule sets is 5 and is greater than the first quantity 3, the arbiter module randomly selects, based on a received matching result, first rule sets corresponding to the filter 2, the filter 3, and the filter 5. The arbiter module sends, to the crossbar module, reference fields of the first packet sent by the filter 2, the filter 3, and the filter 5. The crossbar module records correspondences between the reference field of the first packet and the arbiter module, and schedules a classification engine based on the received reference fields of the first packet. The reference fields of the first packet are respectively sent to a classification engine corresponding to the filter 2, a classification engine corresponding to the filter 3, and a classification engine corresponding to the filter 5. In this way, the three classification engines perform operations of searching stored first rule sets for a first access control rule matching the first packet.

Optionally, after searching for and determining the first access control rule matching the first packet, the classification engine corresponding to the filter 2, the classification engine corresponding to the filter 3, and the classification engine corresponding to the filter 5 return searching results to the crossbar module. The crossbar module returns, based on the previously recorded correspondences between the reference fields of the first packet and the arbiter module, the searching result obtained by searching based on the reference fields of the first packet to the arbiter module corresponding to the reference fields of the first packet. An objective of this step is to avoid a case in which a searching result of a reference field sent by an arbiter module in a searching pipeline 1 is incorrectly sent to an arbiter module in a searching pipeline 2. After receiving the searching results, the arbiter module returns the searching results to the corresponding filters, that is, the filter 2, the filter 3, and the filter 5.

For first rule sets that are not searched and that correspond to a second feature, in other words, first rule sets stored in classification engines corresponding to the filter 1 and the filter 4, searching may start after the classification engines corresponding to the filter 2, the filter 3, and the filter 5 finish searching. In other words, the arbiter module provides a buffering function, and buffers a reference field that cannot be searched in time and that is of the first packet. The searching threshold is set, so that the quantity of first rule sets that are searched in parallel is effectively controlled, and memory resource consumption is effectively reduced.

In a possible implementation, a problem further occurs when the plurality of searching pipelines search for a group of searching rules in parallel, in other words, the first rule set corresponding to the second feature and a third rule set corresponding to a fourth feature are a same rule set. The same rule set is referred to as a conflict rule set herein. In this case, the crossbar module sequentially sends a reference field of the first packet and a reference field of the second packet to the conflict rule set based on priorities of the first packet and the second packet.

For example, an arbiter module included in a searching pipeline for first packet searching determines that the rule set stored in the classification engine 2 is the first rule set corresponding to the second feature, and an arbiter module included in a searching pipeline for second packet searching determines that the rule set stored in the classification engine 2 is the third rule set corresponding to the fourth feature. In other words, the first rule set stored in the classification engine 2 is the conflict rule set. After receiving the reference fields sent by the two arbiter modules, because the priority of the first packet is higher than the priority of the second packet, the crossbar module first sends the reference field of the first packet to the classification engine 2. After the classification engine 2 completes searching based on the reference field of the first packet, the crossbar module sends the reference field of the second packet to the classification engine 2.

Optionally, the priorities of the first packet and the second packet may be determined based on a packet type. For example, the first packet belongs to a game type packet, the second packet is a video type packet, and a priority of the game type packet is higher than a priority of the video type packet. Therefore, the priority of the first packet is higher than the priority of the second packet. Certainly, the priorities of the first packet and the second packet may also be determined by using searching pipelines occupied by the first packet and the second packet. For example, the first packet occupies a searching pipeline 1, the second packet occupies a searching pipeline 2, and a priority of the searching pipeline 1 is higher than a priority of the searching pipeline 2. Based on this, it is determined that the priority of the first packet is higher than the priority of the second packet.

For example, a process of searching for the target rule corresponding to the second packet is similar to a process of searching for the target rule corresponding to the first packet. Details are not described herein. The foregoing example is used to describe the target rule corresponding to the first packet and the target rule corresponding to the second packet that are searched for in parallel. This is intended to describe the searching component having a function of searching for target rules corresponding to a plurality of packets in parallel, but does not limit a quantity of searching performed in parallel by the searching component. Optionally, the searching component may search for target rules corresponding to two packets in parallel, or may search for target rules corresponding to more packets in parallel. This is not limited in this embodiment of this application.

It should be noted that, the searching component may quickly select, through matching between features, a first rule set matching the first packet, to control a quantity of first rule sets that are searched in parallel. In addition, the searching component may further quickly filter out, through matching between features, a packet that does not match the first type rule set, to control a quantity of searching pipelines for parallel searching when the searching pipelines are used to search for target rules corresponding to a plurality of packets.

Optionally, the foregoing diagrams of the structures of the searching components shown in FIG. 1, FIG. 6, and FIG. 8 are intended to describe the searching components by using examples, but not to limit the searching component. A quantity of filters and a quantity of classification engines included in a searching component may be the same as those shown in the foregoing three figures, and are both M. In this way, one-to-one correspondence between the filter and the classification engine is implemented. The quantity of filters may alternatively be less than the quantity of classification engines. In other words, a case in which one filter corresponds to a plurality of classification engines exists. For example, one filtering module includes one filter, configured to quickly filter out a first packet that does not match the first type rule set. Regardless of a case in which a quantity relationship between the filter and the classification engine is one-to-one correspondence or a case in which a quantity relationship between the filter and the classification engine is one-to-many correspondence, a manner of determining a feature stored in the filter is similar to a manner of determining the feature corresponding to the first type rule set in the foregoing embodiments. Details are not described herein.

In conclusion, according to the rule searching method provided in embodiments of this application, different initial access control rules are grouped into a plurality of rule sets, and parallel searching of the plurality of rule sets is implemented by using the first type rule set including the plurality of rule sets. Matching is performed based on the feature corresponding to the first type rule set and the first feature of the first packet, so that the second feature matching the first feature is determined from the feature corresponding to the first type rule set, the first rule set that is in the first type rule set and that corresponds to the second feature is quickly determined based on a feature matching result, and the first access control rule included in the first rule set corresponding to the first packet is searched for a target rule, so that a quantity of rules that need to be searched in the first type rule set is reduced. Therefore, memory resource consumption can be reduced, searching time is shortened, and searching efficiency is improved. In addition, a plurality of searching pipelines are provided, so that target rules corresponding to a plurality of packets can be searched for in parallel. In this way, searching efficiency is further improved in a scenario in which there is a requirement for searching a plurality of packets.

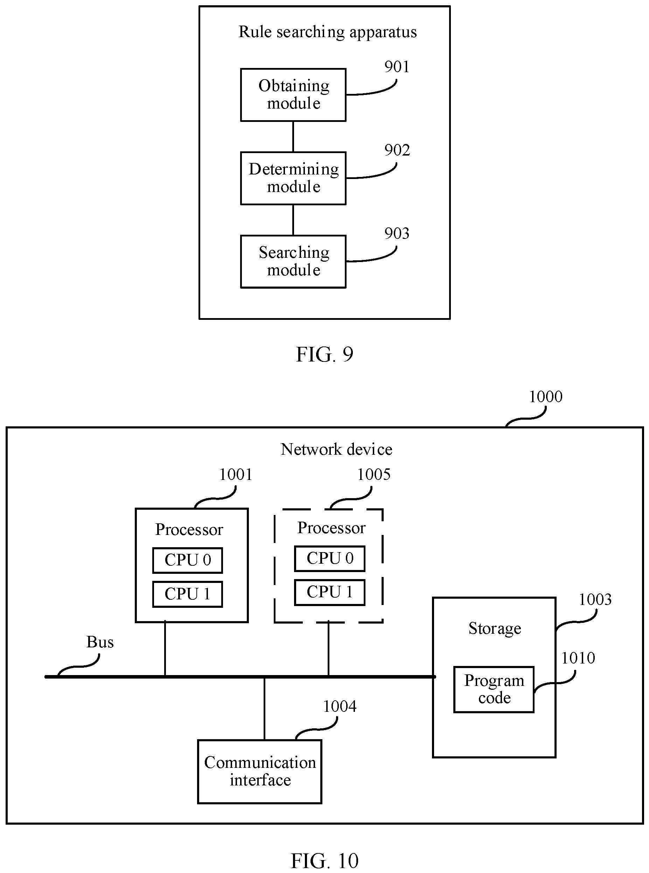

The foregoing describes the rule searching method in embodiments of this application. Corresponding to the foregoing method, embodiments of this application further provides a rule searching apparatus. FIG. 9 is a diagram of a structure of a rule searching apparatus according to an embodiment of this application. Based on the following plurality of modules shown in FIG. 9, the rule searching apparatus shown in FIG. 9 can perform all or a part of operations shown in FIG. 2. It should be understood that the apparatus may include more additional modules than the shown modules, or a part of the shown modules are omitted. This is not limited in this embodiment of this application. As shown in FIG. 9, the apparatus is used in the searching component shown in FIG. 1, and the apparatus includes:
an obtaining module 901, configured to obtain a first feature of a first packet;
a determining module 902, configured to determine a second feature matching the first feature, where the second feature is obtained based on a first access control rule included in a first rule set, the second feature is one or more of features corresponding to a first type rule set, the first type rule set includes the first rule set and a second rule set, the first rule set includes at least one first access control rule, the second rule set includes at least one second access control rule, and the at least one first access control rule is different from the at least one second access control rule; and
a searching module 903, configured to search the at least one first access control rule for a target rule matching the first packet.

In a possible implementation, the obtaining module 901 is further configured to obtain a common feature corresponding to the first access control rule included in the first rule set, and use the common feature as the second feature. The obtaining module 901 is configured to extract a first field that is in the first packet and that corresponds to the common feature, and use information about the first field as the first feature of the first packet.

In a possible implementation, the obtaining module 901 is configured to extract a same field of each first access control rule included in the first rule set, and determine information about the same field as the common feature corresponding to the first access control rule included in the first rule set.

In a possible implementation, the obtaining module 901 is further configured to obtain target content corresponding to the first access control rule included in the first rule set, map the target content to obtain a mapping value, and use the mapping value as the second feature. The target content is all or a part of content of the first access control rule. The obtaining module 901 is configured to extract a second field that is in the first packet and that corresponds to the target content, map a value of the second field, and use an obtained mapping value as the first feature of the first packet.

In a possible implementation, the searching module 903 is configured to determine, in the first access control rule included in the first rule set, a reference rule matching the first packet; and determine, when there are a plurality of reference rules matching the first packet, a highest-priority reference rule in the plurality of reference rules as the target rule.

In a possible implementation, the obtaining module 901 is further configured to obtain a third feature of a second packet. The determining module 902 is further configured to determine, in a process of searching for the target rule corresponding to the first packet, a fourth feature matching the third feature. The fourth feature is obtained based on a third access control rule included in a third rule set. The fourth feature is one or more of features corresponding to a second type rule set. The second type rule set includes the third rule set and a fourth rule set. The third rule set includes at least one third access control rule. The fourth rule set includes at least one fourth access control rule. The at least one third access control rule is different from the at least one fourth access control rule. The searching module 903 is further configured to search the at least one third access control rule for a target rule matching the second packet.

In a possible implementation, the second type rule set and the first type rule set are different rule sets.

In a possible implementation, the second type rule set and the first type rule set are a same rule set. The searching module 903 is configured to select, on a basis that a quantity of first rule sets is greater than a first quantity, the first quantity of first rule sets from a plurality of first rule sets, where the first quantity is determined based on a quantity of rule sets included in the first type rule set; and sequentially search, based on the first quantity, first access control rules included in the plurality of first rule sets for the target rule matching the first packet.

In a possible implementation, the obtaining module 901 is further configured to obtain a plurality of initial access control rules. The apparatus further includes a division module, configured to divide different initial access control rules into one or more corresponding rule sets based on a similarity between the plurality of initial access control rules and a quantity of rule sets, to obtain the first type rule set.

In the foregoing apparatus, the first feature of the first packet is matched with the feature corresponding to the first type rule set, so that second feature matching the first feature is determined from the feature corresponding to the first type rule set, the first rule set that is included in the first type rule set and that corresponds to the second feature is quickly selected based on a feature matching result, and only the first access control rule included in the matched first rule set is searched for the target rule, so that a quantity of rules that need to be searched in the first type rule set is reduced. Therefore, memory resource consumption can be reduced, searching time is shortened, and searching efficiency is improved.

It should be understood that, when the apparatus provided in FIG. 9 implements functions of the apparatus, division into the foregoing function modules is only used as an example for description. In actual application, the foregoing functions may be allocated to different function modules for implementation based on a requirement. In other words, an inner structure of a device is divided into different function modules, to complete all or a part of the functions described above. In addition, the apparatus provided in the foregoing embodiment and the method embodiments belong to a same concept. For specific implementation processes thereof, refer to the method embodiments. Details are not described herein again.

FIG. 10 is a diagram of a structure of a network device 1000 according to an example embodiment of this application. The searching component shown in FIG. 1 is disposed in the network device 1000 shown in FIG. 10, and the searching component is configured to perform operations related to the searching component in the rule searching method shown in FIG. 2. The network device 1000 is, for example, a switch or a router. The network device 1000 may be implemented by a generic bus architecture.

As shown in FIG. 10, the network device 1000 includes at least one processor 1001, a storage 1003, and at least one communication interface 1004.

The processor 1001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 1001 includes an application-specific integrated circuit (application-specific integrated circuit, ASIC), a programmable logic device (programmable logic device, PLD) or another programmable logic device, a transistor logic device, a hardware part, or any combination thereof. The PLD is, for example, a complex programmable logic device (complex programmable logic device, CPLD), a field-programmable logic gate array (field-programmable gate array, FPGA), a generic array logic (generic array logic, GAL), or any combination thereof. The processor may implement or execute various logical blocks, modules, and circuits described with reference to the content disclosed in this embodiment of this application. Alternatively, the processor may be a combination of processors implementing a computing function, for example, a combination including one or more microprocessors, or a combination of a DSP and a microprocessor.

Optionally, the network device 1000 further includes a bus. The bus is configured to transfer information between components of the network device 1000. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used for representing the bus in FIG. 10, but this does not mean that there is only one bus or only one type of bus.

For example, the storage 1003 is a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer, but is not limited thereto. For example, the storage 1003 exists independently, and is connected to the processor 1001 by using the bus. The storage 1003 may alternatively be integrated with the processor 1001.

The communication interface 1004 is configured to communicate with another device or a communication network by using any transceiver-type apparatus. The communication network may be an Ethernet, a radio access network (RAN), a wireless local area network (wireless local area network, WLAN), or the like. The communication interface 1004 may include a wired communication interface, and may further include a wireless communication interface. Specifically, the communication interface 1004 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 1004 may be used by the network device 1000 to communicate with another device.

During specific implementation, in an embodiment, the processor 1001 may include one or more CPUs, for example, a CPU 0 and a CPU 1 shown in FIG. 10. Each of these processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network device 1000 may include a plurality of processors, for example, the processor 1001 and a processor 1005 shown in FIG. 10. Each of these processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the network device 1000 may further include an output device and an input device. The output device communicates with the processor 1001, and can display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 1001, and can receive a user input in a plurality of manners. For example, the input device may be a mouse, a keyboard, a touchscreen device, a sensor device, or the like.

In some embodiments, the storage 1003 is configured to store program code 1010 that is for performing the solutions of this application, and the processor 1001 can execute the program code 1010 stored in the storage 1003. The program code 1010 may include one or more software modules. Optionally, the processor 1001 may also store program code or instructions for executing the solutions of this application.

Steps performed by the searching component in the rule searching method shown in FIG. 2 are completed by an integrated logic circuit of the searching component or by using instructions in a form of software. The steps of the methods disclosed with reference to embodiments of this application may be directly embodied as being performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the storage. The processor reads information in the storage, and completes the steps of the foregoing methods in combination with hardware of the processor. To avoid repetition, details are not described herein again.

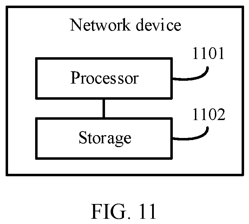

FIG. 11 is a diagram of a structure of another network device according to an embodiment of this application. The network device includes the searching component shown in FIG. 1, and the searching component is configured to perform operations related to the searching component in the rule searching method shown in FIG. 2. For example, the network device is, for example, a server. The server may differ greatly due to different configurations or performance, and may include one or more processors (central processing unit, CPU) 1101 and one or more storages 1102. The one or more storages 1102 store at least one computer program, and the at least one computer program is loaded and executed by the one or more processors 1101. Certainly, the network device may further have parts such as a wired or wireless network interface, a keyboard, and an input/output interface, to perform input/output. The network device may further include another part configured to implement a function of the device. Details are not described herein.

An embodiment of this application further provides a communication apparatus. The apparatus includes a transceiver, a storage, and a processor. The transceiver, the storage, and the processor communicate with each other through an internal connection path. The storage is configured to store instructions. The processor is configured to execute the instructions stored in the storage, to control the transceiver to receive and send signals. In addition, when the processor executes the instructions stored in the storage, the processor is enabled to perform a rule searching method.

It should be understood that the foregoing processor may be a central processing unit (Central Processing Unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware device, or the like. The general-purpose processor may be a microprocessor, any conventional processor, or the like. It should be noted that the processor may be a processor supporting an advanced reduced instruction set computing machine (advanced RISC machine, ARM) architecture.

Further, in an optional embodiment, the storage may include a read-only memory and a random access memory, and provide instructions and data for the processor. The storage may further include a nonvolatile random access memory. For example, the storage may further store information of a device type.

The storage may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example rather than limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a network device. The network device includes a processor. The processor is configured to invoke instructions from a storage and run the instructions stored in the storage, to enable the network device to implement any one of the foregoing rule searching methods.

In a possible implementation, the network device further includes an input interface, an output interface, and the storage. The input interface, the output interface, the processor, and the storage are connected through an internal connection path.

An embodiment of this application further provides a computer-readable storage medium. The storage medium stores at least one instruction, and the instruction is loaded and executed by a processor, to enable a computer to implement any one of the foregoing rule searching methods.

An embodiment of this application further provides a computer program (product). When the computer program is executed by a computer, a processor or the computer is enabled to perform corresponding steps and/or procedures in the foregoing method embodiments.

An embodiment of this application further provides a chip. The chip includes a processor, configured to invoke instructions from a storage and run the instructions stored in the storage, to enable a communication device on which the chip is installed to perform any one of the foregoing rule searching methods.

An embodiment of this application further provides another chip. The chip includes an input interface, an output interface, a processor, and a storage. The input interface, the output interface, the processor, and the storage are connected through an internal connection path. The processor is configured to execute code in the storage. When the code is executed, the processor is configured to perform any one of the foregoing rule searching methods.

All or a part of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer instructions. When the computer program instructions are loaded and executed on a computer, all or a part of the procedures or functions according to this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, microwave, or the like) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid State Disk), or the like.

To clearly describe the interchangeability of hardware and software, the steps and composition of embodiments have been generally described in the foregoing descriptions in terms of functions. Whether the functions are performed by the hardware or the software depends on particular applications and design constraints of the technical solutions. A person of ordinary skill in the art may use different methods to implement the described functions for each particular application, but it should not be considered that the implementation goes beyond the scope of this application.

Computer program code used to implement the method in embodiments of this application may be written in one or more programming languages. The computer program code may be provided for a processor of a general-purpose computer, a dedicated computer, or another programmable rule searching apparatus, so that when the program code is executed by the computer or the another programmable rule searching apparatus, a function/operation specified in the flowchart and/or the block diagram is caused to be implemented. The program code may be executed entirely on a computer, executed partially on a computer, executed as a standalone software package, executed partially on a computer and partially on a remote computer, or executed entirely on a remote computer or a server.

In the context of embodiments of this application, the computer program code or related data may be carried in any proper carrier, so that the device, the apparatus, or the processor can perform various types of processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

It may be clearly understood by a person skilled in the art that, for the purpose of convenient and brief description, for a detailed working process of the described system, device, and module, refer to a corresponding process in the foregoing method embodiments. Details are not described herein again.

In the several embodiments provided in this application, it should be understood that the disclosed systems, devices, and methods may be implemented in other manners. For example, the described device embodiments are merely examples. For example, division into modules is merely logical function division and may be another division during actual implementation. For example, a plurality of modules or components may be combined or integrated into another system, or some features may be ignored or not performed. In addition, the displayed or discussed mutual couplings or direct couplings or communication connections may be implemented through some interfaces, indirect couplings or communication connections between the devices or modules, or electrical connections, mechanical connections, or connections in other forms.

The modules described as separate parts may or may not be physically separate, and parts displayed as modules may or may not be physical modules, may be located in one position, or may be distributed on a plurality of network modules. A part or all of the modules may be selected based on actual requirements to achieve the objectives of the solutions in embodiments of this application.

In addition, function modules in embodiments of this application may be integrated into one processing module, each of the modules may exist alone physically, or two or more modules may be integrated into one module. The foregoing integrated module may be implemented in a form of hardware, or may be implemented in a form of a software function module.

In this application, terms such as "first" and "second" are used to distinguish between same items or similar items whose effects and functions are basically the same. It should be understood that there is no logical or time sequence dependency between "first", "second", and "nth", and a quantity and an execution sequence are not limited. It should be further understood that although terms such as "first" and "second" are used to describe various elements in the following descriptions, these elements are not limited by these terms. These terms are merely used to distinguish one element from another. For example, without departing from the scope of various examples, a first link may be referred to as a second link. Similarly, a second link may be referred to as a first link.

It should be further understood that, sequence numbers of the processes do not mean execution sequences in various embodiments of this application. The execution sequences of the processes should be determined based on functions and internal logic of the processes, and should not constitute any limitation on implementation processes of embodiments of this application.

The term "at least one" in this application means one or more, and the term "a plurality of" in this application means two or more. For example, a plurality of second packets means two or more second packets. The terms "system" and "network" are often interchangeable in this specification.

It should be understood that the terms used in the descriptions of various examples in this specification are only intended to describe particular examples and are not intended to constitute a limitation. The terms "one" ("a" and "an") and "the" of singular forms used in the descriptions of the various examples and the appended claims are also intended to include plural forms, unless otherwise specified in the context clearly.

It should further be understood that the term "include" (also referred to as "includes", "including", "comprises", and/or "comprising") used in this specification specifies presence of the stated features, integers, steps, operations, elements, and/or parts, with presence or adding of one or more other features, integers, steps, operations, elements, parts, and/or groups thereof not excluded.

It should be understood that, according to the context, the phrase "if determining " or "if detecting (a stated condition or event) " may be interpreted as a meaning of "when determining", "in response to determining", "when detecting (a stated condition or event)", or "in response to detecting (a stated condition or event)".

It should be understood that determining B based on A does not mean that B is determined based only on A, and B may also be determined based on A and/or other information.

It should be further understood that "one embodiment", "an embodiment", and "a possible implementation" mentioned throughout the specification mean that a specific feature, structure, or characteristic related to an embodiment or an implementation is included in at least one embodiment of this application. Therefore, "in one embodiment", "in an embodiment", or "a possible implementation" appearing throughout the specification may not necessarily refer to a same embodiment. In addition, these particular features, structures, or characteristics may be combined in one or more embodiments in any proper manner.

## Claims

1. A rule searching method, comprising:
obtaining a first feature of a first packet;
determining a second feature matching the first feature, wherein the second feature is obtained based on a first access control rule comprised in a first rule set, the second feature is one or more of features corresponding to a first type rule set, the first type rule set comprises the first rule set and a second rule set, the first rule set comprises at least one first access control rule, the second rule set comprises at least one second access control rule, and the at least one first access control rule is different from the at least one second access control rule; and
searching the at least one first access control rule for a target rule matching the first packet.

2. The method according to claim 1, wherein before the determining a second feature matching the first feature, the method further comprises:
obtaining a common feature corresponding to the first access control rule comprised in the first rule set, and using the common feature as the second feature; and
the obtaining a first feature of a first packet comprises:
extracting a first field that is in the first packet and that corresponds to the common feature, and using information about the first field as the first feature of the first packet.

3. The method according to claim 2, wherein the obtaining a common feature corresponding to the first access control rule comprised in the first rule set comprises:
extracting a same field of each first access control rule comprised in the first rule set, and determining information about the same field as the common feature corresponding to the first access control rule comprised in the first rule set.

4. The method according to claim 1, wherein before the determining a second feature matching the first feature, the method further comprises:
obtaining target content corresponding to the first access control rule comprised in the first rule set, mapping the target content to obtain a mapping value, and using the mapping value as the second feature, wherein the target content is all or a part of content of the first access control rule; and
the obtaining a first feature of a first packet comprises:
extracting a second field that is in the first packet and that corresponds to the target content, mapping a value of the second field, and using an obtained mapping value as the first feature of the first packet.

5. The method according to any one of claims 1 to 4, the searching the at least one first access control rule for a target rule matching the first packet comprises:
determining, in the first access control rule comprised in the first rule set, a reference rule matching the first packet; and
determining, when there are a plurality of reference rules matching the first packet, a highest-priority reference rule in the plurality of reference rules as the target rule.

6. The method according to any one of claims 1 to 5, wherein the method further comprises:
obtaining a third feature of a second packet;
determining, in a process of searching for the target rule corresponding to the first packet, a fourth feature matching the third feature, wherein the fourth feature is obtained based on a third access control rule comprised in a third rule set, the fourth feature is one or more of features corresponding to a second type rule set, the second type rule set comprises the third rule set and a fourth rule set, the third rule set comprises at least one third access control rule, the fourth rule set comprises at least one fourth access control rule, and the at least one third access control rule is different from the at least one fourth access control rule; and
searching the at least one third access control rule for a target rule matching the second packet.

7. The method according to claim 6, wherein the second type rule set and the first type rule set are different rule sets.

8. The method according to claim 6, wherein the second type rule set and the first type rule set are a same rule set; and the searching the at least one first access control rule for a target rule matching the first packet comprises:
selecting, on a basis that a quantity of first rule sets is greater than a first quantity, the first quantity of first rule sets from a plurality of first rule sets, wherein the first quantity is determined based on a quantity of rule sets comprised in the first type rule set; and
sequentially searching, based on the first quantity, first access control rules comprised in the plurality of first rule sets for the target rule matching the first packet.

9. The method according to any one of claims 1 to 8, wherein before the determining a second feature matching the first feature, the method further comprises:
obtaining a plurality of initial access control rules; and
dividing different initial access control rules into a corresponding rule set based on a similarity between the plurality of initial access control rules and a quantity of rule sets, to obtain the first type rule set.

10. A rule searching apparatus, wherein the apparatus comprises:
an obtaining module, configured to obtain a first feature of a first packet;
a determining module, configured to determine a second feature matching the first feature, wherein the second feature is obtained based on a first access control rule comprised in a first rule set, the second feature is one or more of features corresponding to a first type rule set, the first type rule set comprises the first rule set and a second rule set, the first rule set comprises at least one first access control rule, the second rule set comprises at least one second access control rule, and the at least one first access control rule is different from the at least one second access control rule; and
a searching module, configured to search the at least one first access control rule for a target rule matching the first packet.

11. The apparatus according to claim 10, wherein the obtaining module is further configured to obtain a common feature corresponding to the first access control rule comprised in the first rule set, and use the common feature as the second feature; and the obtaining module is configured to extract a first field that is in the first packet and that corresponds to the common feature, and use information about the first field as the first feature of the first packet.

12. The apparatus according to claim 11, wherein the obtaining module is configured to extract a same field of each first access control rule comprised in the first rule set, and determine information about the same field as the common feature corresponding to the first access control rule comprised in the first rule set.

13. The apparatus according to claim 10, wherein the obtaining module is further configured to obtain target content corresponding to the first access control rule comprised in the first rule set, map the target content to obtain a mapping value, and use the mapping value as the second feature, wherein the target content is all or a part of content of the first access control rule; and the obtaining module is configured to extract a second field that is in the first packet and that corresponds to the target content, map a value of the second field, and use an obtained mapping value as the first feature of the first packet.

14. The apparatus according to any one of claims 10 to 13, wherein the searching module is configured to determine, in the first access control rule comprised in the first rule set, a reference rule matching the first packet; and determine, when there are a plurality of reference rules matching the first packet, a highest-priority reference rule in the plurality of reference rules as the target rule.

15. The apparatus according to any one of claims 10 to 14, wherein the obtaining module is further configured to obtain a third feature of a second packet; the determining module is further configured to determine, in a process of searching for the target rule corresponding to the first packet, a fourth feature matching the third feature, wherein the fourth feature is obtained based on a third access control rule comprised in a third rule set, the fourth feature is one or more of features corresponding to a second type rule set, the second type rule set comprises the third rule set and a fourth rule set, the third rule set comprises at least one third access control rule, the fourth rule set comprises at least one fourth access control rule, and the at least one third access control rule is different from the at least one fourth access control rule; and the searching module is further configured to search the at least one third access control rule for a target rule matching the second packet.

16. The apparatus according to claim 15, wherein the second type rule set and the first type rule set are different rule sets.

17. The apparatus according to claim 15, wherein the second type rule set and the first type rule set are a same rule set; and the searching module is configured to select, on a basis that a quantity of first rule sets is greater than a first quantity, the first quantity of first rule sets from a plurality of first rule sets, wherein the first quantity is determined based on a quantity of rule sets comprised in the first type rule set; and sequentially search, based on the first quantity, first access control rules comprised in the plurality of first rule sets for the target rule matching the first packet.

18. The apparatus according to any one of claims 10 to 17, wherein the obtaining module is further configured to obtain a plurality of initial access control rules; and the apparatus further comprises a division module, configured to divide different initial access control rules into one or more corresponding rule sets based on a similarity between the plurality of initial access control rules and a quantity of rule sets, to obtain the first type rule set.

19. A network device, wherein the network device comprises a processor, and the processor is configured to run a computer program or instructions, to enable the network device to implement the rule searching method according to any one of claims 1 to 9.

20. The network device according to claim 19, wherein the network device further comprises an input interface, an output interface, and a storage, and the input interface, the output interface, the processor, and the storage are connected through an internal connection path.

21. A computer-readable storage medium, wherein the computer-readable storage medium stores at least one instruction, and the instruction is loaded and executed by a processor to implement the rule searching method according to any one of claims 1 to 9.

22. A computer program product, wherein the computer program product comprises a computer program/instructions, and the computer program is executed/the instructions are executed by a processor, to enable a computer to implement the rule searching method according to any one of claims 1 to 9.
